# EUROPEAN PATENT SPECIFICATION

(11) **EP 2 400 628 B1**
(45) Date of publication and mention of the grant of the patent: **21.03.2018**
(21) Application number: 11250443.6
(22) Date of filing: 08.04.2011
(51) Int. Cl.: H02J 7/00, H01M 10/42, H01M 10/48

(54) **Battery protecting circuit, and battery pack**
Batterieschutzschaltung, und Batteriepack
Circuit de protection de batterie, bloc-batterie

(30) Priority: 09.06.2010 US 353088 P; 28.02.2011 US 37158
(43) Date of publication of application: 28.12.2011
(73) Proprietor: Samsung SDI Co., Ltd., Yongin-si, Gyeonggi-do (KR)
(72) Inventor: Beom-Gyu, Kim, Yongin-si, Gyeonggi-do (KR); Segawa, Susumu, Yongin-si, Gyeonggi-do (KR); Eui-Jeong, Hwang, Yongin-si, Gyeonggi-do (KR); Se-Sub, Sim, Yongin-si, Gyeonggi-do (KR); Jong-Woon, Yang, Yongin-si, Gyeonggi-do (KR); Han-Seok, Yun, Yongin-si, Gyeonggi-do (KR); Jin-Wan, Kim, Yongin-si, Gyeonggi-do (KR)
(74) Representative: Mounteney, Simon James

(56) References cited:
- EP-A2- 2 085 784
- JP-A- 2009 124 883
- US-A1- 2006 022 637
- US-A1- 2009 176 146
- US-A1- 2009 256 521

## Description

### BACKGROUND OF THE INVENTION

### Field of the invention

The present invention relates to a battery protecting circuit, and a battery pack.

### Description of Related Art

With an increase in use of portable electronic devices, such as mobile phones, digital cameras, laptop computers, and the like, batteries for supplying power to operate portable such electronic devices have been extensively developed.

Batteries are provided as a battery pack including a battery cell and a protecting circuit that controls charging and discharging of the battery cell. Batteries may be categorized into lithium ion (Li-ion) batteries, nickel-cadmium (Ni-Cd) batteries, or the like according to the type of a battery cell. The battery cell may be used as a rechargeable secondary battery.

A battery protection circuit as specified in the preamble of claim 1 is known from US 2009/0176146.

### SUMMARY OF THE INVENTION

The present invention sets out to provide a battery protecting circuit that is stably operable, and a battery pack.

According to an aspect of the present invention there is provided a battery pack protection circuit as set out in Claim 1. Preferred features of this aspect of the invention are set out in Claims 2 to 14.

### BRIEF DESCRIPTION OF THE DRAWINGS

FIG. 1 illustrates a block diagram of a battery pack according to an embodiment of the present invention;
FIG. 2 illustrates a circuit diagram of a malfunction sensing unit according to an embodiment of the present invention;
FIG. 3 illustrates a circuit diagram of a malfunction sensing unit according to another embodiment of the present invention;
FIG. 4 illustrates a circuit diagram of a malfunction sensing unit according to another embodiment of the present invention;
FIG. 5 illustrates a circuit diagram of a malfunction sensing unit according to another embodiment of the present invention;
FIG. 6 illustrates a timing diagram of input and output signals of a malfunction sensing unit, according to an embodiment of the present invention;
FIG. 7 illustrates a block diagram of a battery pack according to another embodiment of the present invention;
FIG. 8 illustrates a timing diagram of input and output signals of a malfunction sensing unit, according to another embodiment of the present invention;
FIG. 9 illustrates a timing diagram of input and output signals of a malfunction sensing unit, according to another embodiment of the present invention;
FIG. 10 illustrates a block diagram of a battery pack according to another embodiment of the present invention; and
FIG. 11 illustrates a block diagram of a battery pack according to another embodiment of the present invention.

### DETAILED DESCRIPTION

The present invention will now be described more fully with reference to the accompanying drawings, in which embodiments of the invention are shown. In the following description of the present invention, only core features of the present invention that are necessary to implement will be described, and a detailed description of the other features will not be provided not to make obscure the subject matter of the invention. Unless otherwise defined, all terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

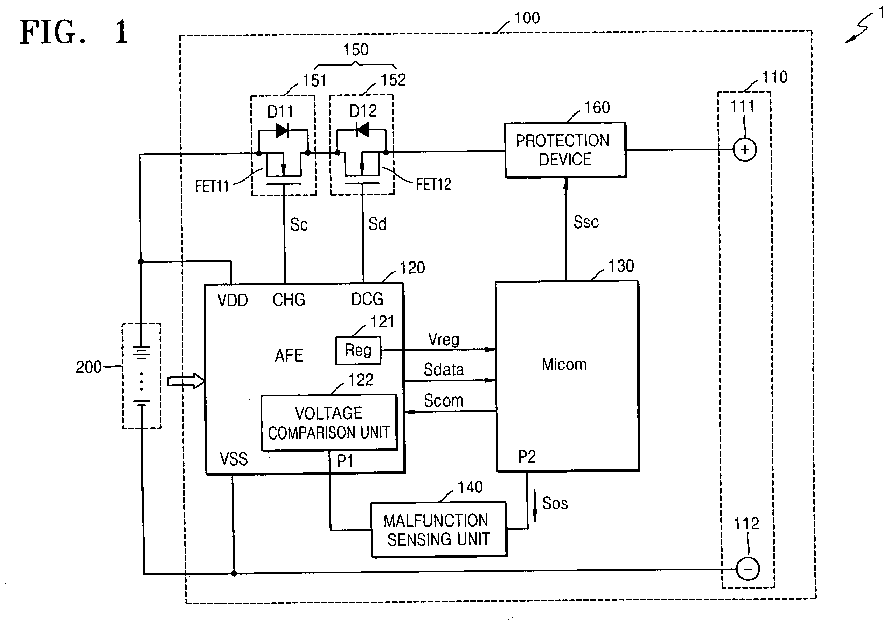

FIG. 1 illustrates a block diagram of a battery pack 1 according to an embodiment of the present invention.

Referring to FIG. 1, the battery pack 1 according to the current embodiment of the present invention includes a battery protection circuit 100 (hereinafter, a 'protection circuit') and a battery cell 200.

The battery cell 200 includes at least one bare cell. The battery cell is connected to the protection circuit 100. Charging or discharging occurs when an external device is connected to a terminal unit 110 of the protection circuit 100. The battery cell 200 is a rechargeable secondary battery.

The protection circuit 100 controls charging and discharging of the battery cell 200, and senses an abnormal condition of the battery cell 200 to prevent damage to the battery cell 200. The protection circuit 100 includes the terminal unit 110, an analog front-end 120, a controller in the form of a microcomputer (Micom) 130, a malfunction sensing unit 140, a charging/discharging switch 150, and a protection circuit 160.

The terminal unit 110 is connected to a charging device for charging the battery cell 200 or an external device. The external device may be a load consuming electric energy stored in the battery cell 200. The terminal unit 110 includes a positive terminal 111 and a negative terminal 112. When the charging device is connected to the terminal unit 110, charging occurs in the battery pack 1 while a current inflows via the positive terminal 111 and outflows via the negative terminal 112. Meanwhile, when the external device is connected to the terminal unit 110, discharging occurs in the battery pack 1 while a current outflows via the positive terminal 111 and outflows via the negative terminal.

The analog front-end 120 controls charging and discharging of the battery cell 200. The analog front-end 120 senses a charge/discharge status of the battery cell 200, an internal current flow status of the battery pack 1, the temperature of the battery pack 1, and the like. The analog front-end 120 transmits the sensed data as sensed data Sdata resulting from sensing the statuses of the battery cell 200 to the microcomputer 130. Although in FIG. 1 the sensed data Sdata are denoted with a single arrow, for convenience of explanation, as if only one piece of sensed data Sdata is provided, the sensed data Sdata may include a plurality of pieces of data. For example, the sensed data Sdata may include temperature data, voltage data, current data, and the like. In addition, the plurality of pieces of data may be transmitted to the microcomputer 130 through separate signal transfer lines, respectively.

The analog front-end 120 operates using a voltage of the battery cell 200. The analog front-end 120 includes a regulator 121 to generate a power voltage Vreg and to apply the power voltage Vreg to the microcomputer 130.

The analog front-end 120 receives a command signal Scom from the microcomputer 130, and applies a charge control signal Sc or a discharge control signal Sd to the charging/discharging switch 150 according to the command signal Scom to control an On/Off operation of the charging/discharging switch 150.

The analog front-end 120 includes a voltage comparison unit 122. The voltage comparison unit 122 receives a signal output from the malfunction sensing unit 140 via a terminal P1, and determines that the microcomputer 130 is malfunctioning, if the magnitude of the received signal falls within predetermined conditions. For example, the voltage comparison unit 122 may determine that the microcomputer 130 is malfunctioning, if the magnitude of the received signal is smaller or equal to that of a reference voltage Vref. Alternatively, the voltage comparison unit 122 may determine that the microcomputer 130 is malfunctioning, when the received signal transits from a logic high to a logic low and vice versa. If the voltage comparison unit 122 determines that the microcomputer 130 is malfunctioning, the analog front-end 120 transmits the charge control signal Sc or the discharge control signal Sd to the charging/discharging switch 150 to turn off the charging/discharging switch 150.

The microcomputer 130 receives the power voltage Vreg from the analog front-end 120 to use it as a power source. The microcomputer 130 receives the sensed data Sdata from the analog front-end 120, and transmits the command signal Scom to the analog front-end 120 according to the sensed data Sdata to control the operation of the analog front-end 120. For example, if there is a voltage variation among individual bare cells of the battery cell 200, the microcomputer 130 may control the analog front-end 120 to control a cell balancing operation in order for the bare cells to have a constant voltage. As another example, if the battery cell 200 is in an over-charge or over-discharge status, the microcomputer 130 may execute control to stop a charge or discharge operation of the battery cell 200. Although in FIG. 1 the command signal Scom is denoted with a single arrow, for convenience of explanation, as if only one command signal Scom is provided, the command signal Scom may include a plurality of commands. In this regard, the plurality of command signals may be transmitted to the analog front-end 120 through separate signal transfer lines, respectively.

If the analog front-end 120 is malfunctioning, the microcomputer 130 senses that the analog front-end 120 is malfunctioning and controls the protection device 160 to stop a charge or discharge operation of the battery cell 200 for protection. However, this may apply only when the protection device 160 requires external control.

The microcomputer 130 outputs an operation status signal Sos to the malfunction sensing unit 140 via a terminal P2 for the analog front-end 120 to sense a failure or a malfunction of the microcomputer 130. For example, if the microcomputer 130 is in a normal condition, a logic high signal may be output as the operation status signal Sos. Alternatively, if the microcomputer 130 is in a normal condition, a pulse signal may be output as the operation status signal Sos.

The malfunction sensing unit 140 senses a failure or a malfunction of the microcomputer 130 and transmits the sensed result to the analog front-end 120. The malfunction sensing unit 140 may output different signals between when the microcomputer 130 is in a normal condition and in an abnormal condition, so that the voltage comparison unit 122 of the analog front-end 120 can sense the signals.

The charging/discharging switch 150 includes a charge control switch 151 and a discharge control switch 152. Each of the charge control switch 151 and the discharge control switch 152 includes a field effect transistor (FET) and a parasitic diode. For example, the charge control switch 151 includes a field effect transistor FET11 and a parasitic diode D11. The discharge control switch 152 includes a field effect transistor FET12 and a parasitic diode D12. The direction in which a source and a drain of the field effect transistor FET 1 of the charge control switch 151 are connected is opposite to the direction in which those of the field effect transistor FET2 of the discharge control switch device 152 are connected. In other words, the field effect transistor FET11 of the charge control switch 151 is connected in such a way as to restrict a flow of current from the positive terminal 111 to the battery cell 200 or from the battery cell 200 to the negative terminal 112. On the other hand, the field effect transistor FET12 of the discharge control switch 152 is connected in such a way as to restrict a flow of current from the battery cell 200 to the positive terminal 111 or from the negative terminal 112 to the battery cell 200. In this regard, the field effect transistor FET11 of the charge control switch 151 and the field effect transistor FET12 of the discharge control switch 152 are switching devices. However, the field effect transistors FET11 and FET12 are not limited thereto and may be any electric device with a switching function. The parasitic diode D11 of the charge control switch 151 and the parasitic diode D12 of the discharge control switch 152 may be arranged in such a way that currents flow therethrough in directions opposite to directions in which the field effect transistors FETs 11 and 12 thereof respectively restrict flows of current.

The protection device 160 is arranged in a high current path (HCP) to control the outflow of current from the battery cell 200 or the inflow of current to the battery cell 200. The protection device 160 operates when the charging/discharging switch 150 does not normally function due to a failure of the analog front-end 120. The protection device 160 may be a fuse or a positive temperature coefficient (PTC) thermistor. Alternatively, the protection device 160 may be a device that may spontaneously operate according to a flow of current. Alternatively, the protection device 160 may be a device that may operate under the control of the microcomputer 130.

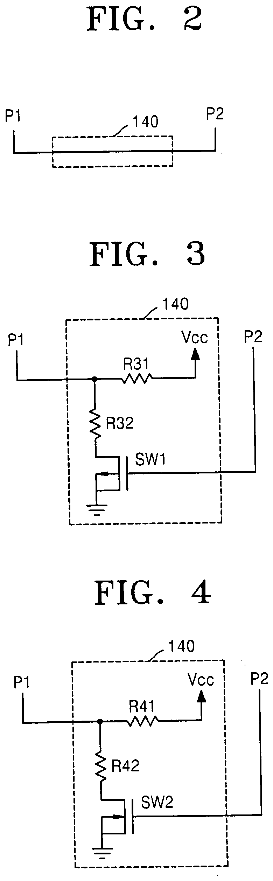

FIGS. 2 and 3 illustrate circuit diagrams of embodiments of the malfunction sensing unit 140 of FIG. 1, respectively.

Referring to FIG. 2, the malfunction sensing unit 140 per se may be omitted in favour of a signal line directly connecting the terminal P2 of the microcomputer 130 and the terminal P1 of the analog front-end 120. In a normal condition, the microcomputer 130 outputs a logic high signal as the operation status signal Sos. The analog front-end 120 may then determine that the microcomputer 130 is having a failure, if the voltage comparison unit 122 determines that the level of the operation status signal Sos received via the terminal P1 is smaller or equal to the level of the reference voltage Vref. The reference voltage Vref may have a level that is predetermined when manufacturing the battery pack 1.

Referring to FIG. 3, the malfunction sensing unit 140 may instead include a plurality of resistors R31 and R32, and a switching device SW1. The resistor R31 is connected between the terminal P1 and a voltage source of a first voltage Vcc. The resistor R32 is connected between the terminal P1 and an electrode of the switching device SW1. An electrode of the switching device SW1, separate from the electrode connected to the resistor R32, is connected to ground. A gate electrode of the switching device SW1 is connected to the terminal P2. The switching device SW1 may be a p-channel field effect transistor (FET).

In a normal condition, the microcomputer 130 outputs a logic high signal as the operation status signal Sos. Then, the switching device SW1 of the malfunction sensing unit 140 is turned off by the operation status signal Sos, so that the first voltage Vcc is applied to the terminal P1. The first voltage Vcc has a level greater than the reference voltage Vref. Then, when the voltage comparison unit 122 determines that the first voltage Vcc received through the terminal P1 has a level greater than the reference voltage Vref, the analog front-end 120 determines that the microcomputer 130 is in a normal condition.

On the other hand, in a failure or malfunction condition, the microcomputer 130 outputs a logic low signal as the operation status signal Sos or stops outputting the operation status signal Sos. Then, the switching device SW1 of the malfunction sensing unit 140 is turned on by the operation status signal Sos, so that a partial voltage divided from the first voltage Vcc by the resistors R31 and R32 is applied to the terminal P1. For example, the partial voltage applied to the terminal P1 may be represented as Vcc*R32/(R31+R32). In this regard, the resistors R31 and R32 may be designed in such a way that the partial voltage has a level smaller than the reference voltage Vref. Then, when the voltage comparison unit 122 determines that the output signal of the malfunction sensing unit 140 received through the terminal P1 has a level smaller than the reference voltage Vref, the analog front-end 120 determines that the microcomputer 130 is having a failure.

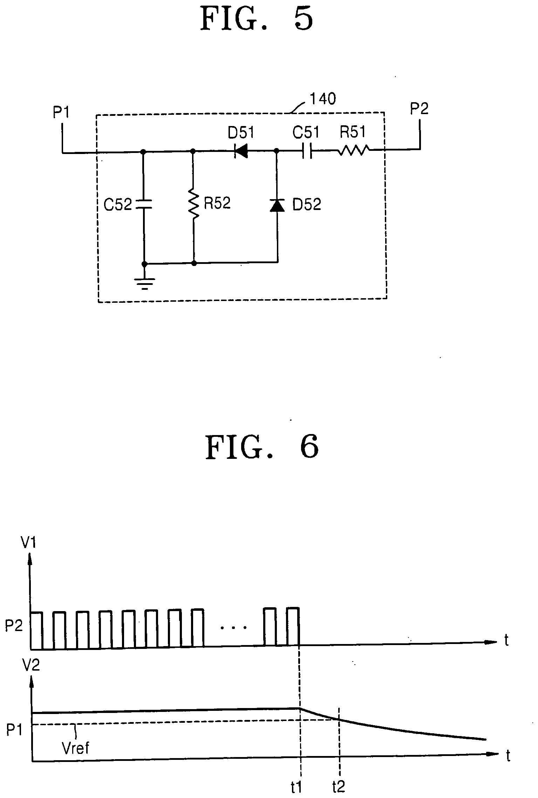

FIGS. 4 and 5 illustrate circuit diagrams of embodiments of the malfunction sensing unit 140 of FIG. 1, respectively.

Referring to FIG. 4, the malfunction sensing unit 140 according to the current embodiment includes a plurality of resistors R41 and R42, and a switching device SW2. The resistor R41 is connected between the terminal P1 and a voltage source of a first voltage Vcc. The resistor R42 is connected between the terminal P1 and an electrode of the switching device SW2. An electrode of the switching device SW2, separate from the electrode connected to the resistor R42, is connected to ground. A gate electrode of the switching device SW2 is connected to the terminal P2. The switching device SW2 may be an n-channel field effect transistor (FET).

In a normal condition, the microcomputer 130 outputs a logic high signal as the operation status signal Sos. Then, the switching device SW2 of the malfunction sensing unit 140 is turned on by the operation status signal Sos, so that a partial voltage divided from the first voltage Vcc by the resistors R41 and R42 is applied to the terminal P1. For example, the partial voltage applied to the terminal P1 may be represented as Vcc*R42/(R41+R42). In this regard, the resistors R41 and R42 may be designed in such a way that the partial voltage has a level smaller than the reference voltage Vref. Then, when the voltage comparison unit 122 determines that the output signal of the malfunction sensing unit 140 received through the terminal P1 has a level smaller than the reference voltage Vref, the analog front-end 120 determines that the microcomputer 130 is in a normal condition.

On the other hand, in a failure or malfunction condition, the microcomputer 130 outputs a logic low signal as the operation status signal Sos or stops outputting the operation status signal Sos. Then, the switching device SW2 of the malfunction sensing unit 140 is turned off by the operation status signal Sos, so that the first voltage Vcc is applied to the terminal P1. The first voltage Vcc has a level greater than the reference voltage Vref. Then, when the voltage comparison unit 122 determines that the first voltage Vcc received through the terminal P1 has a level greater than the reference voltage Vref, the analog front-end 120 determines that the microcomputer 130 is having a failure.

The malfunction sensing unit 140 of FIG. 4 operates in an opposite manner to the malfunction sensing unit 140 described above with reference to FIG. 3.

Referring to FIG. 5, the malfunction sensing unit 140 according to the current embodiment includes a plurality of resistors R51 and R52, a plurality of capacitors C51 and C52, and a plurality of diodes D51 and D52.

The diode D51, the capacitor C51 and the resistor R51 are connected in series between the terminals P1 and P2. A cathode of the diode D51 is connected to the terminal P1, and an anode of the diode D51 is connected to the capacitor C51 to prevent a reverse flow of current from the terminal P1 to the terminal P2. The capacitor C51 removes an offset component from the operation status signal Sos output through the terminal P2.

The capacitor C52 and the resistor R52 are connected in parallel between the terminal P1 and ground. A cathode of the diode D52 is connected to the anode of the diode D51, and an anode of the diode D52 is connected to ground.

In a normal condition, the microcomputer 130 outputs a pulse signal at a constant interval as the operation status signal Sos. As the operation status signal Soc is applied to the malfunction sensing unit 140, charges are accumulated in the capacitor C52, and a voltage across the capacitor C52 is applied to the terminal P1. The voltage comparison unit 122 compares the voltage across the capacitor C52 and the reference voltage Vref, and determines that the microcomputers 130 is in a normal condition if the voltage across the capacitor C52 has a level greater than the reference voltage Vref. In this regard, the magnitude of the voltage across the capacitor C52 is determined according to the duty ratio of the operation status signal Sos. To this end, the microcomputer 130 controls the duty ratio of the operation status signal Sos, which is to be output therefrom, in such a way that the voltage across the capacitor C52 has a level greater than the reference voltage Vref if the microcomputer 130 is in a normal condition.

On the other hand, in a failure or malfunction condition, the microcomputer 130 outputs a logic low signal as the operation status signal Sos or stops outputting the operation status signal Sos. Then, charges in the capacitor C52 begin to discharge, and the voltage across the capacitor C52 has a level smaller than the reference voltage Vref, so that the analog front-end 120 determines that the microcomputer 130 is having a failure.

FIG. 6 illustrates a timing diagram of input and output signals of the malfunction sensing unit 140 of FIG. 5, according to an embodiment of the present invention.

Referring to FIG. 6, a voltage having a level that is greater than or equal to the reference voltage Vref is output to the terminal P1 while a pulse signal is received through the terminal P2. Thus, the analog front-end 120 determines that the microcomputer 130 is in a normal condition. However, if the pulse signal is no longer received at a time t1, the charges stored in the capacitor C52 begin to discharge and thus the voltage across the capacitor C52 gradually decreases and reaches a level that is smaller than or equal to the reference voltage at a time t2. Thus, the analog front-end 120 may determine starting from the time t2 that the microcomputer 130 is having a failure.

The reference voltage Vref may be defined in such a way that an interval between the time t1 and the time t2 is to be greater than the width of a logic low period of of the pulse signal output from the terminal P2 for the following reason. If the width of the logic low period of the pulse signal output from the terminal P2 is greater than the interval between the time t1 and the time t2, the voltage across the capacitor C52 may have a level smaller than the reference voltage Vref while the pulse signal output from the terminal P2 is at a logic low, leading to an erroneous determination that the microcomputer 130 is having a failure.

As described above, according to the battery protection circuit 100 of FIG. 1, the analog front-end 120 may stop a charging and discharging operation of the battery pack 1 if a failure or malfunctioning of the microcomputer 520 is sensed. Thus, the operation of the battery pack 1 may be stably controlled.

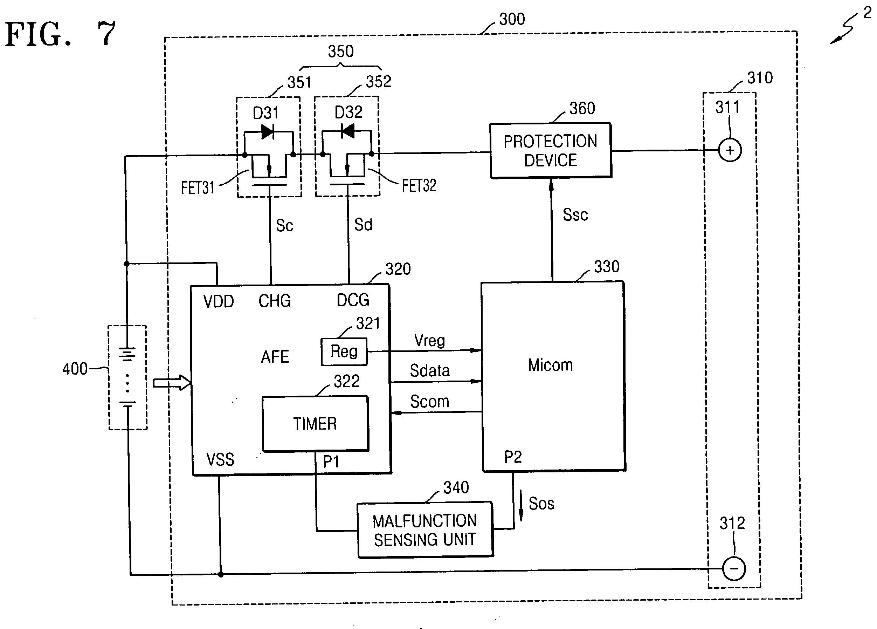

FIG. 7 illustrates a block diagram of a battery pack 2 according to another embodiment of the present invention. The battery pack 2 according to the current embodiment has a similar structure and function to those of the battery pack 1 of FIG. 1. Thus, only different features from the battery pack 1 of FIG. 1 will be described.

Referring to FIG. 7, the battery pack 2 includes a protection circuit 300 and a battery cell 400. The protection circuit 300 includes a terminal unit 310, an analog front-end 320, a microcomputer 330, a malfunction sensing unit 340, a charging/discharging switch 350, and a protection device 360.

In the current embodiment, the analog front-end 320 includes a timer 322. The timer 322 receives the operation status signal Sos output from the malfunction sensing unit 340 via the terminal P1, and the analog front-end circuit 320 determines that the microcomputer 330 is malfunctioning, if the operation status signal Sos is not received for a reference time duration Δt. Alternatively, the timer 320 may determine that the microcomputer 330 is malfunctioning, if a signal having a level greater than or equal to a reference voltage Vref is not received for a reference time duration Δt.

If the analog front-end 320 determines that the microcomputer 130 is malfunctioning, the analog front-end 320 transmits a charge control signal Sc or a discharge control signal Sd to the charging/discharging switch 350 to turn off the charging/discharging switch 350.

An operation of the malfunction sensing unit 340, according to the current embodiment of the present invention, will be described.

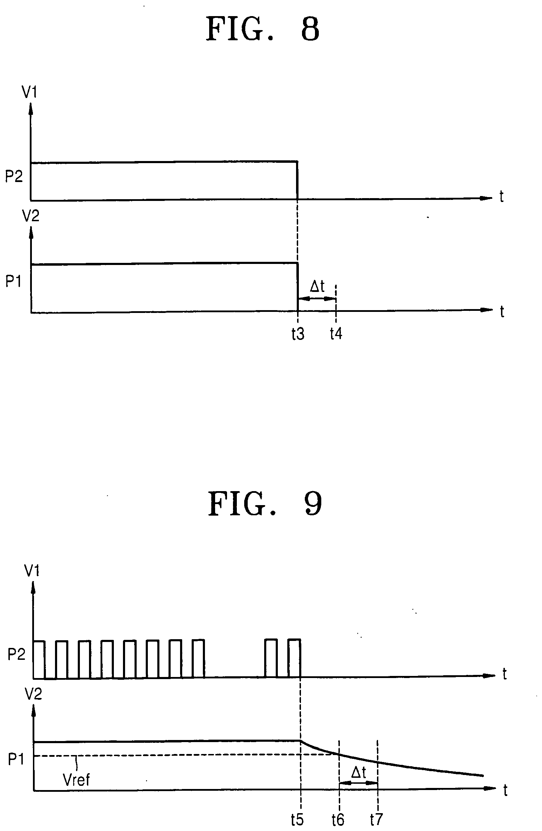

FIG. 8 illustrates a timing diagram of input and output signals of the malfunction sensing unit 340, according to another embodiment of the present invention. The malfunction sensing unit 340 may be any one of the circuits of FIGS. 2 through 4.

For example, if the malfunction sensing unit 340 has a configuration as shown in FIG. 2, when the operation status signal Sos received through the terminal P2 transits from a logic high to a logic low at a time t3, a signal to be output through the terminal P1 is transited from a logic high to a logic low at substantially the same time. The timer 322 measures a time duration from the time t3 at which the signal received through the terminal P1 transits from a logic high to a logic low, and determines that the microcomputer 330 is having a failure after the reference time duration Δt. The operating principles of the circuits of FIGS. 3 and 4 are substantially the same as the operation of the circuit of FIG. 2, except for the level of the voltage applied to the terminal P1. Thus, a detailed description thereof will not be provided here.

FIG. 9 is a timing diagram of input and output signals of the malfunction sensing unit 340, according to another embodiment of the present invention. The malfunction sensing unit 340 may be the circuit of FIG. 5.

In a normal condition, the microcomputer 330 outputs a pulse signal at an interval as the operation status signal Sos. As the operation status signal Soc is applied to the malfunction sensing unit 340, charges are accumulated in the capacitor C52, and a voltage across the capacitor C52 is applied to the terminal P1. The timer 322 determines that the microcomputer 330 is in a normal condition if a voltage having a predetermined level is continuously applied to the opposite terminals of the capacitor C52 for a predetermined duration.

On the other hand, in a failure or malfunction condition, the microcomputer 330 outputs a logic low signal as the operation status signal Sos or stops outputting the operation status signal Sos. Then, charges in the capacitor C52 begin to discharge, and thus the level of the voltage across the capacitor 52 is reduced to a level smaller than the level of the reference voltage Vref from a time t6. The timer 322 measures a time duration from the time t6, and determines that the microcomputer 330 is having a failure, when the time duration reaches the reference time duration (Δt).

The reference voltage Vref and the reference time duration Δt may be defined in such a way that an interval between the time t5 and the time t7 is to be greater than the width of a logic low period of the pulse signal output from the terminal P2 for the following reason. If the width of the logic low period of the pulse signal output from the terminal P2 is greater than the interval between the time t5 and the time t7, the voltage across the capacitor C52 may have a level smaller than the reference voltage Vref and the reference time duration Δt may have lapsed while the pulse signal from the terminal P2 is at a logic low, leading to an erroneous determination that the microcomputer 330 is having a failure.

As described above, in the battery protecting circuit 300 according to the current embodiment, the analog front-end 320 may stop a charging and discharging operation of the battery pack 2 if a failure or malfunctioning of the microcomputer 330 is sensed. Thus, the operation of the battery pack 2 may be stably controlled.

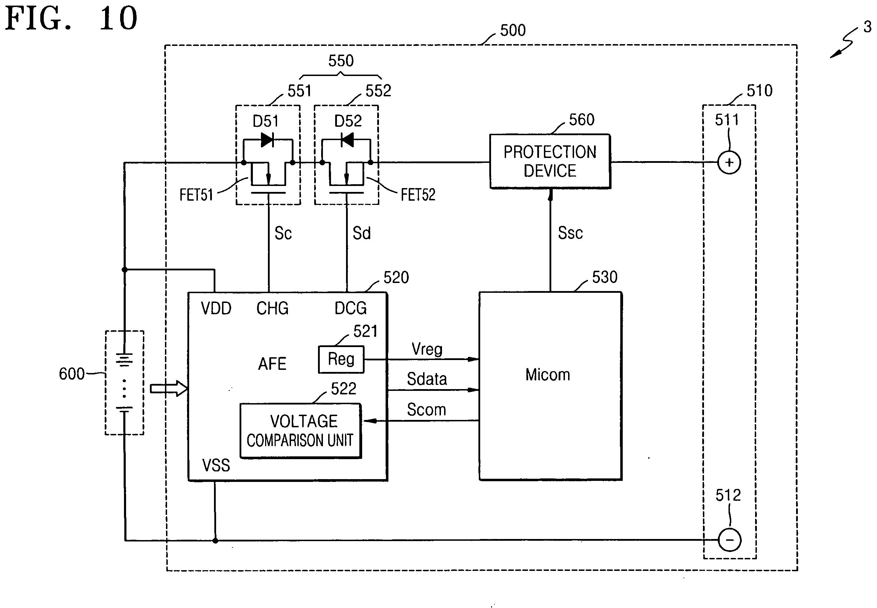

FIG. 10 illustrates a block diagram of a battery pack 3 according to another embodiment of the present invention. The battery pack 3 according to the current embodiment has a similar structure and function to those of the battery pack 1 of FIG. 1. Thus, only different features from the battery pack 1 of FIG. 1 will be described.

Referring to FIG. 10, the battery pack 3 includes a protection circuit 500 and a battery cell 600. The protection circuit 500 includes a terminal unit 510, an analog front-end 520, a microcomputer 530, a charging/discharging switch 560, and a protection device 360.

In the current embodiment, the analog front-end 520 includes a voltage comparison unit 522. The voltage comparison unit 522 receives a command signal Scom transmitted from the microcomputer 530. The voltage comparison unit 522 may determine whether the microcomputer 530 is having a failure or is malfunctioning by comparing the voltage level of the command signal Scom with a reference voltage Vref. Thus, in the current embodiment the protection circuit 500 may not include the malfunction sensing unit 140 (340). In addition, since the command signal Scom is used to determine the operation condition of the microcomputer 530 as in conventional technologies, the microcomputer 530 and the analog front-end 520 may be designed to have a reduced number of ports. The method in the voltage comparison unit 522 of determining whether the microcomputer 530 is having a failure or is malfunctioning is described above, and thus a detailed description thereof will not be provided here.

As described above, in the battery protecting circuit 500 according to the current embodiment, the analog front-end 520 may stop a charging and discharging operation of the battery pack 1 if a failure or malfunctioning of the microcomputer 530 is sensed. Thus, the operation of the battery pack 1 may be stably controlled.

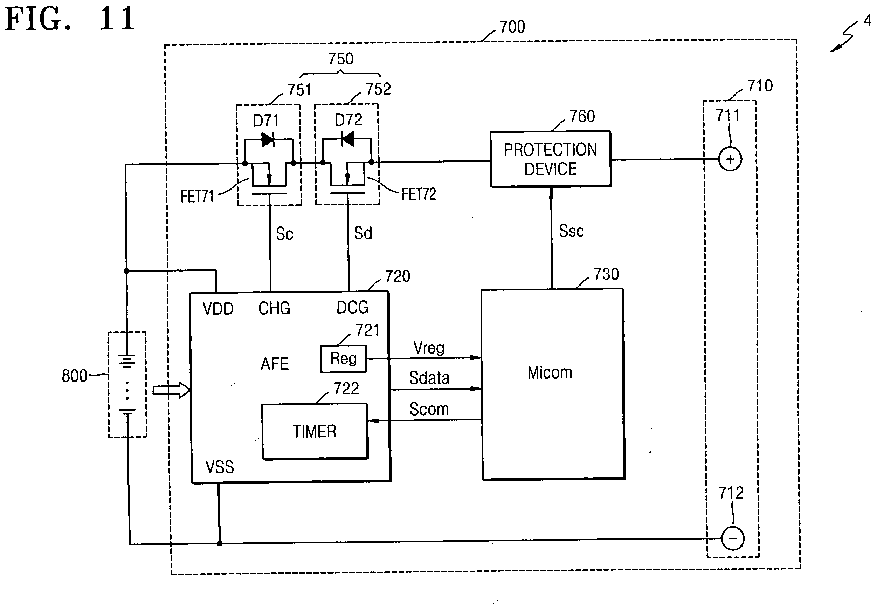

FIG. 11 illustrates a block diagram of a battery pack 4 according to another embodiment of the present invention. The battery pack 4 according to the current embodiment has a similar structure and function to those of the battery pack 3 of FIG. 10. Thus, only different features from the battery pack 3 of FIG. 10 will be described.

Referring to FIG. 11, the battery pack 4 includes a protection circuit 700 and a battery cell 800. The protection circuit 700 includes a terminal unit 710, an analog front-end 720, a microcomputer 730, a charging/discharging switch 750, and a protection device 760.

In the current embodiment, the analog front-end 720 includes a timer 722. The timer 722 receives a command signal Scom transmitted from the microcomputer 730. The timer 722 determines whether the command signal Scom is continuously transmitted for a reference time duration (Δt), and determines that the microcomputer 720 is having a failure if the signal is not. Thus, in the current embodiment, the protection circuit 700 may not include the malfunction sensing unit 140 (340). In addition, since the command signal Scom is used to determine the operation condition of the microcomputer 730 as in conventional technologies, the microcomputer 530 and the analog front-end 720 may be designed to have a reduced number of ports. The method of determining in the timer 722 whether the microcomputer 730 is having a failure or is malfunctioning is described above, and thus a detailed description thereof will not be provided here.

As described above, in the battery protecting circuit 700 according to the current embodiment, the analog front-end 720 may stop a charging and discharging operation of the battery pack 4 if a failure or malfunctioning of the microcomputer 730 is sensed. Thus, the operation of the battery pack 4 may be stably controlled.

Programs for executing the control methods according to the one or more embodiments of the present invention in the battery protecting circuits 100, 300, 500, and 700 and the battery packs 1 through 4 may be stored in recording media. The term "recording media" used herein refers to processor readable media. The recording media may be semiconductor recording media, for example, flash memory. The recording media are readable and executable by a processor.

It should be understood that the embodiments described herein should be considered in a descriptive sense only and not for purposes of limitation. Descriptions of features or aspects within each embodiment should typically be considered as available for other similar features or aspects in other embodiments.

## Claims

1. A battery pack protection circuit (100) comprising:
a controller (130);
a charge/discharge switch (150);
an analogue front end (AFE) (120);
a charge/discharge terminal (111); and
a protection device (160) connected between the charge/discharge switch (150) and the charge/discharge terminal (111);
wherein the AFE (120) is adapted to monitor a condition of a battery cell (200) and supply a data signal representative of the condition to the controller (130);
the controller (130) is adapted to receive the data signal from the AFE (120) and assign an operating state to the battery cell (200) on the basis of the data signal;
the controller (130) is adapted to supply a command signal to the AFE (120) in order to implement the operating state of the battery; and
the AFE (120) is adapted to operate the charge/discharge switch (150) in response to the command signal;
**characterised in that** the AFE (120) comprises status determining means (122) for processing a received signal (P1) in order to determine whether the controller (130) has experienced a failure; and
the controller (130) is connected to the protection device (160) and is adapted to cause the protection device (160) to interrupt a charging operation or a discharging operation if the AFE (120) malfunctions.

2. A battery pack protection circuit according to Claim 1, wherein the status determining means comprises a voltage comparison unit (122) that is adapted to compare the received signal with a reference voltage.

3. A battery pack protection circuit according to Claim 1, wherein the status determining means comprises a timer (322) that is adapted to identify a period of interruption in the received signal.

4. A battery pack protection circuit according to any preceding claim, comprising a malfunction sensing unit (140) connected between the controller (130) and the AFE (120); wherein the said malfunction sensing unit (140) is adapted to receive a first operation status signal from the controller, respond to the first operation status signal, and output a second operation status signal to the AFE; wherein both the first operation status signal and the second operation status signal indicate an operating status of the controller (130) and the second operation status signal is the said received signal.

5. A battery pack protection circuit according to Claim 4, wherein:
the malfunction sensing unit (140) comprises a first terminal (P1), a second terminal (P2), a first resistor (R31), a second resistor (R32), and a switching device (SW1);
the first terminal (P1) is connected to the AFE;
the second terminal (P2) is connected to the controller (130);
the first resistor (R31) is connected between the first terminal (P1) and a first voltage source (VCC);
the second resistor (R32) is connected between the first terminal (P1) and a first electrode of the switching device (SW1);
a second electrode of the switching device (SW1) is connected to ground; and
a gate electrode of the switching device is connected to the second terminal (P2).

6. A battery pack protection circuit according to Claim 5, wherein the malfunction sensing unit (140) is adapted to apply a first voltage derived from the first voltage source to the first terminal (P1) upon receipt of logic high signal at the second terminal, and apply a second voltage divided from the first voltage source by the first and second resistors (R31, R32) upon receipt of either a logic low signal or an interrupted signal at the second terminal.

7. A battery pack protection circuit according to Claim 5, wherein the malfunction sensing unit (140) is adapted to apply a first voltage divided from the first voltage source by the first and second resistors (R31, R32) upon receipt of logic high signal at the second terminal (P2), and apply a second voltage derived from the first voltage source to the first terminal (P1) upon receipt of either a logic low signal or an interrupted signal at the second terminal.

8. A battery pack protection circuit according to Claim 4, wherein:
the malfunction sensing unit (140) comprises first and second terminals (P1, P2), first and second diodes (D51, D52), and first and second capacitors (C51, C52);
the first terminal is connected to the AFE (120);
the second terminal (P2) is connected to the controller (130);
the first diode (D51), the first capacitor (C51) and the first resistor (R51) are connected in series between the first and second terminals (P1, P2);
a cathode of the first diode (D51) is connected to the first terminal (P1);
an anode of the first diode (D51) is connected to the first capacitor (C51);
the second capacitor (C52) and the second resistor (R52) are connected in parallel between the first terminal (P1) and ground;
a cathode of the second diode (D52) is connected to the anode of the first diode (D51); and
an anode of the second diode (D52) is connected to ground.

9. A battery pack protection circuit according to Claim 8, wherein the malfunction sensing unit (140) is adapted to apply a first voltage derived from a voltage across the second capacitor (C52) to the first terminal (P1) upon receipt of a pulse signal having substantially constant intervals at the second terminal (P2), and apply a second voltage derived from a falling voltage across the second capacitor (C52) upon receipt of a pulse signal having non-constant intervals or an interrupted signal at the second terminal (P2).

10. A battery pack protection circuit according to one of Claims 1 to 3, wherein the controller (130) is directly connected to the status determining means.

11. A battery pack protection circuit according to Claim 10, wherein the received signal is a command signal sent to the AFE (120) by the controller (130) via the direct connection.

12. A battery pack protection circuit according to Claim 10, wherein the received signal is an operation status signal sent to the AFE (120) by the controller (130) via the direct connection.

13. A battery pack protection circuit according to any preceding claim, wherein the AFE (120) is adapted to operate the charge/discharge switch (150) when the status determining means determines that the controller (130) has experienced a failure.

14. A battery pack comprising a battery pack protection circuit according to any preceding claim.

## Patentansprüche

1. Batteriepack-Schutzschaltung (100), umfassend:
einen Controller (130);
einen Lade-/Entladeschalter (150);
eine analoge Eingangsschaltung (AFE) (120);
einen Lade-/Entladeanschluss (111); und
eine Schutzvorrichtung (160), die zwischen den Lade-/Entladeschalter (150) und den Lade-/Entladeanschluss (111) verbunden ist;
worin die AFE (120) dafür eingerichtet ist, einen Zustand einer Batteriezelle (200) zu überwachen und ein Datensignal, das den Zustand darstellt, an den Controller (130) zu übergeben;
wobei der Controller (130) dafür eingerichtet ist, das Datensignal von der AFE (120) zu empfangen und der Batteriezelle (200) auf der Grundlage des Datensignals einen Betriebsstatus zuzuweisen;
wobei der Controller (130) dafür eingerichtet ist, ein Befehlssignal an die AFE (120) zu übergeben, um den Betriebsstatus der Batterie zu implementieren; und
die AFE (120) dafür eingerichtet ist, den Lade-/Entladeschalter (150) als Antwort auf das Befehlssignal zu betätigen;
**dadurch gekennzeichnet, dass** die AFE (120) ein Statusbestimmungsmittel (122) zum Verarbeiten eines empfangenen Signals (P1) umfasst, um zu bestimmen, ob der Controller (130) eine Störung erfahren hat; und
der Controller (130) mit der Schutzvorrichtung (160) verbunden ist und dafür eingerichtet ist, die Schutzvorrichtung (160) zu veranlassen, einen Ladebetrieb oder einen Entladebetrieb zu unterbrechen, wenn die AFE (120) eine Fehlfunktion hat.

2. Batteriepack-Schutzschaltung nach Anspruch 1, worin das Statusbestimmungsmittel eine Spannungsvergleichseinheit (122) umfasst, die dafür eingerichtet ist, das empfangene Signal mit einer Bezugsspannung zu vergleichen.

3. Batteriepack-Schutzschaltung nach Anspruch 1, worin das Statusbestimmungsmittel einen Zeitgeber (322) umfasst, der dafür eingerichtet ist, im empfangenen Signal einen Zeitraum der Unterbrechung zu erkennen.

4. Batteriepack-Schutzschaltung nach einem der vorhergehenden Ansprüche, umfassend eine Fehlfunktionserfassungsschaltung (140), die zwischen den Controller (130) und die AFE (120) verbunden ist; worin die besagte Fehlfunktionserfassungsschaltung (140) dafür eingerichtet ist, ein erstes Betriebsstatussignal vom Controller zu empfangen, auf das erste Betriebsstatussignal zu antworten und ein zweites Betriebsstatussignal an die AFE auszugeben; worin sowohl das erste Betriebsstatussignal als auch das zweite Betriebsstatussignal einen Betriebsstatus des Controllers (130) angeben und das zweite Betriebsstatussignal das besagte empfangene Signal ist.

5. Batteriepack-Schutzschaltung nach Anspruch 4, worin:
die Fehlfunktionserfassungsschaltung (140) einen ersten Anschluss (P1), einen zweiten Anschluss (P2), einen ersten Widerstand (R31), einen zweiten Widerstand (R32) und eine Schaltvorrichtung (SW1) umfasst;
der erste Anschluss (P1) mit der AFE verbunden ist;
der zweite Anschluss (P2) mit dem Controller (130) verbunden ist;
der erste Widerstand (R31) zwischen den ersten Anschluss (P1) und eine erste Spannungsquelle (VCC) verbunden ist;
der zweite Widerstand (R32) zwischen den ersten Anschluss (P1) und eine erste Elektrode der Schaltvorrichtung (SW1) verbunden ist;
eine zweite Elektrode der Schaltvorrichtung (SW1) mit Masse verbunden ist; und
eine Gate-Elektrode der Schaltvorrichtung mit dem zweiten Anschluss (P2) verbunden ist.

6. Batteriepack-Schutzschaltung nach Anspruch 5, worin die Fehlfunktionserfassungsschaltung (140) dafür eingerichtet ist, an den ersten Anschluss (P1) bei Empfang eines Hochpegel-Logiksignals am zweiten Anschluss eine aus der ersten Spannungsquelle abgeleitete erste Spannung anzulegen und bei Empfang entweder eines Tiefpegel-Logiksignals oder eines unterbrochenen Signals am zweiten Anschluss eine durch die ersten und zweiten Widerstände (R31, R32) aus der ersten Spannungsquelle geteilte erste Spannung anzulegen.

7. Batteriepack-Schutzschaltung nach Anspruch 5, worin die Fehlfunktionserfassungsschaltung (140) dafür eingerichtet ist, an den ersten Anschluss (P1) bei Empfang eines Hochpegel-Logiksignals am zweiten Anschluss (P2) eine durch die ersten und zweiten Widerstände (R31, R32) aus der ersten Spannungsquelle geteilte erste Spannung anzulegen und bei Empfang entweder eines Tiefpegel-Logiksignals oder eines unterbrochenen Signals am zweiten Anschluss eine aus der ersten Spannungsquelle abgeleitete erste Spannung anzulegen.

8. Batteriepack-Schutzschaltung nach Anspruch 4, worin:
die Fehlfunktionserfassungsschaltung (140) erste und zweite Anschlüsse (P1, P2), erste und zweite Dioden (D51, D52) und erste und zweite Kondensatoren (C51, C52) umfasst;
der erste Anschluss (P1) mit der AFE (120) verbunden ist;
der zweite Anschluss (P2) mit dem Controller (130) verbunden ist;
die erste Diode (D51), der erste Kondensator (C51) und der erste Widerstand (R51) zwischen die ersten und zweiten Anschlüsse (P1, P2) in Reihe geschaltet sind;
eine Kathode der ersten Diode (D51) mit dem ersten Anschluss (P1) verbunden ist;
eine Anode der ersten Diode (D51) mit dem ersten Kondensator (C51) verbunden ist;
der zweite Kondensator (C52) und der zweite Widerstand (R52) zwischen den ersten Anschluss (P1) und Masse parallel geschaltet sind;
eine Kathode der zweiten Diode (D52) mit der Anode der ersten Diode (D51) verbunden ist; und
eine Anode der zweiten Diode (D52) mit Masse verbunden ist.

9. Batteriepack-Schutzschaltung nach Anspruch 8, worin die Fehlfunktionserfassungsschaltung (140) dafür eingerichtet ist, an den ersten Anschluss (P1) bei Empfang eines Impulssignals mit im Wesentlichen konstanten Intervallen am zweiten Anschluss (P2) eine aus einer Spannung über dem zweiten Kondensator (C52) abgeleitete erste Spannung anzulegen und bei Empfang entweder eines Impulssignals mit nicht konstanten Intervallen oder eines unterbrochenen Signals am zweiten Anschluss (P2) eine aus einer sinkenden Spannung über dem zweiten Kondensator (C52) abgeleitete zweite Spannung anzulegen.

10. Batteriepack-Schutzschaltung nach einem der Ansprüche 1 bis 3, worin der Controller (130) direkt mit dem Statusbestimmungsmittel verbunden ist.

11. Batteriepack-Schutzschaltung nach Anspruch 10, worin das empfangene Signal ein Befehlssignal ist, das durch den Controller (130) über die direkte Verbindung an die AFE (120) gesendet wird.

12. Batteriepack-Schutzschaltung nach Anspruch 10, worin das empfangene Signal ein Betriebsstatussignal ist, das durch den Controller (130) über die direkte Verbindung an die AFE (120) gesendet wird.

13. Batteriepack-Schutzschaltung nach einem der vorhergehenden Ansprüche, worin die AFE (120) dafür eingerichtet ist, den Lade-/Entladeschalter (150) zu betätigen, wenn das Statusbestimmungsmittel bestimmt, dass der Controller (130) eine Störung erfahren hat.

14. Batteriepack, umfassend eine Batteriepack-Schutzschaltung nach einem der vorhergehenden Ansprüche.

## Revendications

1. Circuit de protection de bloc-batterie (100) comprenant :
un contrôleur (130) ;
un commutateur de charge/décharge (150) ;
un frontal analogique (AFE) (120) ;
une borne de charge/décharge (111) ; et
un dispositif de protection (160) qui est connecté entre le commutateur de charge/décharge (150) et la borne de charge/décharge (111) ;
dans lequel l'AEE (120) est adapté de manière à ce qu'il surveille une condition d'une cellule de batterie (200) et de manière à ce qu'il fournisse un signal de données qui est représentatif de la condition au contrôleur (130) ;
dans lequel le contrôleur (130) est adapté de manière à ce qu'il reçoive le signal de données qui provient de l'AFE (120) et de manière à ce qu'il assigne un état de fonctionnement à la cellule de batterie (200) sur la base du signal de données ;
dans lequel le contrôleur (130) est adapté de manière à ce qu'il fournisse un signal de commande à l'AFE (120) afin de mettre en oeuvre l'état de fonctionnement de la batterie ; et
l'AFE (120) est adapté de manière à ce qu'il actionne le commutateur de charge/décharge (150) en réponse au signal de commande ;
**caractérisé en ce que** l'AFE (120) comprend un moyen de détermination de statut (122) pour traiter un signal reçu (P1) afin de déterminer si oui ou non le contrôleur (130) a subi une défaillance ; et
le contrôleur (130) est connecté au dispositif de protection (160) et est adapté de manière à faire en sorte que le dispositif de protection (160) interrompe une opération de charge ou une opération de décharge si l'AFE (120) dysfonctionne.

2. Circuit de protection de bloc-batterie selon la revendication 1, dans lequel le moyen de détermination de statut comprend une unité de comparaison de tension (122) qui est adaptée de manière à ce qu'elle compare le signal reçu avec une tension de référence.

3. Circuit de protection de bloc-batterie selon la revendication 1, dans lequel le moyen de détermination de statut comprend une minuterie (322) qui est adaptée de manière à ce qu'elle identifie une période d'interruption dans le signal reçu.

4. Circuit de protection de bloc-batterie selon l'une quelconque des revendications qui précèdent, comprenant une unité de détection de dysfonctionnement (140) qui est connectée entre le contrôleur (130) et l'AFE (120) ; dans lequel ladite unité de détection de dysfonctionnement (140) est adaptée de manière à ce qu'elle reçoive un premier signal de statut de fonctionnement qui provient du contrôleur, réponde au premier signal de statut de fonctionnement et émette en sortie un second signal de statut de fonctionnement à l'AFE ; dans lequel le premier signal de statut de fonctionnement et le second signal de statut de fonctionnement indiquent tous deux un statut de fonctionnement du contrôleur (130) et le second signal de statut de fonctionnement est ledit signal reçu.

5. Circuit de protection de bloc-batterie selon la revendication 4, dans lequel :
l'unité de détection de dysfonctionnement (140) comprend une première borne (P1), une seconde borne (P2), une première résistance (R31), une seconde résistance (R32) et un dispositif de commutation (SW1) ;
la première borne (P1) est connectée à l'AFE ;
la seconde borne (P2) est connectée au contrôleur (130) ;
la première résistance (R31) est connectée entre la première borne (P1) et une première source de tension (VCC) ;
la seconde résistance (R32) est connectée entre la première borne (P1) et une première électrode du dispositif de commutation (SW1) ;
une seconde électrode du dispositif de commutation (SW1) est connectée à la masse ; et
une électrode de grille du dispositif de commutation est connectée à la seconde borne (P2).

6. Circuit de protection de bloc-batterie selon la revendication 5, dans lequel l'unité de détection de dysfonctionnement (140) est adaptée de manière à ce qu'elle applique une première tension qui est dérivée à partir de la première source de tension sur la première borne (P1) suite à la réception d'un signal de niveau logique haut au niveau de la seconde borne et de manière à ce qu'elle applique une seconde tension qui est divisée à partir de la première source de tension au moyen des première et seconde résistances (R31, R32) suite à la réception de soit un signal de niveau logique bas, soit un signal interrompu au niveau de la seconde borne.

7. Circuit de protection de bloc-batterie selon la revendication 5, dans lequel l'unité de détection de dysfonctionnement (140) est adaptée de manière à ce qu'elle applique une première tension qui est divisée à partir de la première source de tension au moyen des première et seconde résistances (R31, R32) suite à la réception d'un signal de niveau logique haut au niveau de la seconde borne (P2) et de manière à ce qu'elle applique une seconde tension qui est dérivée à partir de la première source de tension sur la première borne (P1) suite à la réception de soit un signal de niveau logique bas, soit un signal interrompu au niveau de la seconde borne.

8. Circuit de protection de bloc-batterie selon la revendication 4, dans lequel
l'unité de détection de dysfonctionnement (140) comprend des première et seconde bornes (P1, P2), des première et seconde diodes (D51, D52) et des premier et second condensateurs (C51, C52) ;
la première borne (P1) est connectée à l'AFE (120) ;
la seconde borne (P2) est connectée au contrôleur (130) ;
la première diode (D51), le premier condensateur (C51) et la première résistance (R51) sont connectés en série entre les première et seconde bornes (P1, P2) ;
une cathode de la première diode (D51) est connectée à la première borne (P1) ;
une anode de la première diode (D51) est connectée au premier condensateur (C51) ;
le second condensateur (C52) et la seconde résistance (R52) sont connectés en parallèle entre la première borne (P1) et la masse ;
une cathode de la seconde diode (D52) est connectée à l'anode de la première diode (D51) ; et
une anode de la seconde diode (D52) est connectée à la masse.

9. Circuit de protection de bloc-batterie selon la revendication 8, dans lequel l'unité de détection de dysfonctionnement (140) est adaptée de manière à ce qu'elle applique une première tension qui est dérivée à partir d'une tension du second condensateur (C52) sur la première borne (P1) suite à la réception d'un signal impulsionnel qui présente des intervalles sensiblement constants au niveau de la seconde borne (P2), et de manière à ce qu'elle applique une seconde tension qui est dérivée à partir d'une chute de tension du second condensateur (C52) suite à la réception d'un signal impulsionnel qui présente des intervalles non constants ou d'un signal interrompu au niveau de la seconde borne (P2).

10. Circuit de protection de bloc-batterie selon l'une quelconque des revendications 1 à 3, dans lequel le contrôleur (130) est directement connecté au moyen de détermination de statut.

11. Circuit de protection de bloc-batterie selon la revendication 10, dans lequel le signal reçu est un signal de commande qui est envoyé à l'AFE (120) par le contrôleur (130) via la connexion directe.

12. Circuit de protection de bloc-batterie selon la revendication 10, dans lequel le signal reçu est un signal de statut de fonctionnement qui est envoyé à l'AFE (120) par le contrôleur (130) via la connexion directe.

13. Circuit de protection de bloc-batterie selon l'une quelconque des revendications qui précèdent, dans lequel l'AFE (120) est adapté de manière à ce qu'il actionne le commutateur de charge/décharge (150) lorsque le moyen de détermination de statut détermine que le contrôleur (130) a subi une défaillance.

14. Bloc-batterie comprenant un circuit de protection de bloc-batterie selon l'une quelconque des revendications qui précèdent.
